# EUROPÄISCHE PATENTANMELDUNG

(11) **EP 4 778 389 A1**
(43) Veröffentlichungstag der Anmeldung: **22.07.2026**
(21) Anmeldenummer: 26150523.4
(22) Anmeldetag: 07.01.2026
(51) Int. Cl.: A01K 1/01, A01K 5/00

(54) **FUTTERMISCHER MIT AUTOMATISCHEM GETRIEBE FÜR MISCHWERKZEUG**

(30) Priorität: 07.01.2025 DE 102025100325
(71) Anmelder: Maschinenfabrik Bernard van Lengerich GmbH & Co. KG, 48488 Emsbüren (DE)
(72) Erfinder: Pfeiffer, Dominic, 48485 Neuenkirchen (DE); Diekamp, Raimund, 48499 Salzbergen (DE)
(74) Vertreter: Völler-Blumenroth, Johannes Florian

(57) **Zusammenfassung**

Die Erfindung betrifft einen Futtermischer mit einem Mischbehälter zur Aufnahme von Futter, wenigstens einem im Mischbehälter drehend angeordneten Mischwerkzeug (6), einer Antriebseinrichtung zum Antreiben des Mischwerkzeugs, die ein automatisch schaltbares Getriebe mit einer ersten Übersetzungsstufe und wenigstens einer zweiten Übersetzungsstufe umfasst, wobei das Getriebe als Lastschaltgetriebe ausgebildet ist, sowie mit einer Steuereinrichtung zum Schalten des Getriebes, wobei das Getriebe zumindest einen Neutralgang aufweist und die Steuereinrichtung ausgebildet ist, das Getriebe nach Ablauf einer vorbestimmbaren Zeitspanne in den Neutralgang zu schalten.

## Beschreibung

Die vorliegende Erfindung betrifft einen Futtermischer nach dem Oberbegriff des Anspruchs 1 sowie ein Verfahren zum Betreiben eines Futtermischers gemäß Anspruch 6.

Futtermischer insbesondere in der Form von Futtermischwagen werden in landwirtschaftlichen Betrieben zum Mischen und Verteilen von Viehfutter verwendet.

Die Futtermischer weisen hierzu einen Mischbehälter auf, in den die einzelnen Komponenten des zu mischenden Futters eingebracht werden. In dem Mischbehälter ist zumindest ein Mischwerkzeug angeordnet. Bei dem Mischwerkzeug kann es sich um eine horizontal oder vertikal im Mischbehälter angeordnete Mischschnecke handeln. Der Futtermischer umfasst eine Antriebseinrichtung zum Antreiben des Mischwerkzeugs. Die Antriebseinrichtung umfasst ein automatisch schaltbares Getriebe mit einer ersten Übersetzungsstufe und wenigstens einer zweiten Übersetzungsstufe. Das Getriebe ist als Lastschaltgetriebe ausgebildet. Lastschaltgetriebe sind Getriebe, die unter Last geschaltet werden können. Ferner umfasst der Futtermischer eine Steuereinrichtung zum Schalten des Getriebes.

Derartige Futtermischer sind bekannt. Die Antriebseinrichtung ist mit einem Motor verbunden. Dieser stellt Energie für das Drehen des Mischwerkzeugs bereit. Bei als Futtermischwagen ausgebildeten Futtermischern ist die Antriebseinrichtung über eine Zapfwelle mit einer Zapfstelle eines landwirtschaftlichen Nutzfahrzeugs, eines Schleppers, verbunden.

Alternativ kann ein solcher Futtermischer als Selbstfahrer ausgebildet sein. Die Antriebseinrichtung wird dann von einem Motor des Selbstfahrers angetrieben. Hierbei kann es sich um einen dezidierten Hydraulikmotor handeln. Die Antriebseinrichtung kann auch mit dem Motor eines Fahrantriebs des Selbstfahrers verbunden sein.

Aus der US 8,850,910 B1 ist eine Mischvorrichtung für Futter mit einem manuell betätigbaren Getriebe mit mindestens zwei verschiedenen Übersetzungsstufen bekannt, das geschaltet werden kann, ohne die Leistung zu einem Mischelement der Mischvorrichtung auch nur momentan zu unterbrechen. Das manuelle Getriebe kann durch Modifikation vorbekannter automatische Getriebe erhalten werden. Das manuell schaltbare Getriebe erlaubt es dem Bediener der Mischvorrichtung, das Übersetzungsverhältnis stets zu kontrollieren.

Die EP 1 634 758 A1 offenbart ein Getriebe für einen Futtermischer, das mit minimalem oder ganz ohne Eingriff einer Bedienperson eine einfache und schnelle Umkehr der Drehrichtung des Mischelements eines Futtermischers erlaubt, um eine Blockade des Mischelements zu beseitigen. Hierzu kann die Erkennung einer Blockade und die Umkehr der Drehrichtung automatisch erfolgen.

Aufgabe der vorliegenden Erfindung ist es, einen Futtermischer bereitzustellen, der einfach bedienbar ist und dabei insbesondere energiesparend und futterschonend ist.

Erfindungsgemäß wird die Aufgabe dadurch gelöst, dass das Getriebe einen Neutralgang aufweist. Der Neutralgang ist dadurch definiert, dass das Mischwerkzeug von dem Motor abgekoppelt ist und somit unabhängig vom Betriebszustand des Motors nicht angetrieben wird, wenn das Getriebe in den Neutralgang geschaltet ist. Weiterhin ist erfindungsgemäß die Steuereinrichtung eingerichtet, das Getriebe nach Ablauf einer vorbestimmten Zeitspanne, einer maximalen Mischzeit, in den Neutralgang zu schalten. Die maximale Mischzeit ist dabei vorgegeben oder von einem Bediener vorgebbar. Insbesondere ist die maximale Mischzeit so bemessen, dass nach Ablauf der maximalen Mischzeit das Futter ausreichend gemischt vorliegt. Nach Ablauf der maximalen Mischzeit wird das Mischwerkzeug dann automatisch nicht länger angetrieben. Das im Mischbehälter angeordnete Futter wird nicht länger bewegt und daher geschont. Vor allem wird jedoch automatisch ein unnötiger Energieverbrauch durch ein weiteres Mischen des Futters verhindert.

Ein Bediener eines entsprechenden Futtermischers wird von der Aufgabe entlastet, das Ende der Mischzeit festzustellen und das Mischwerkzeug manuell abzuschalten. Insbesondere erfolgt das Abschalten des Mischwerkzeugs automatisch auch dann, wenn ein Bediener des Futtermischers diesen zwischenzeitlich unbeaufsichtigt lassen sollte. Die Bedienung eines solchen Futtermischers ist hierdurch vereinfacht.

Bevorzugt ist die Antriebseinrichtung drehmomentsensorlos ausgebildet und mit zumindest einem Drehzahlsensor versehen, der die Drehzahl zumindest eines Elements der Antriebseinrichtung misst. Die Steuereinrichtung des Futtermischers ist eingerichtet, das Getriebe in Abhängigkeit der vom Drehzahlsensor erfassten Drehzahl zu schalten. Die Drehzahl eines Elements der Antriebseinrichtung kann im Vergleich zur Bestimmung eines Drehmoments mit deutlich geringerem Aufwand bestimmt werden. Ein solcher Futtermischer kann günstiger erhalten werden.

Je nach Dichte des Futters und/oder Beladung des Mischbehälters kann das zum Drehen des Mischwerkzeugs erforderliche Drehmoment variieren. Über das schaltbare Getriebe mit zumindest zwei Übersetzungsstufen kann hierauf leicht reagiert werden.

So kann bei einem bereits beladenen Mischbehälter das Mischwerkzeug zunächst mit dem Getriebe in einer Übersetzungsstufe mit hohem Übersetzungsverhältnis langsam in Bewegung gesetzt werden. Hierbei erfolgt eine Mischung und Auflockerung des Futters im Mischbehälter. Wenn das Futter soweit gelockert ist, dass das für das Drehen des Mischwerkzeugs erforderliche Drehmoment gesunken ist, kann das Getriebe in eine andere Übersetzungsstufe mit einem niedrigerem Übersetzungsverhältnis geschaltet werden. Das Mischwerkzeug dreht dann schneller und es erfolgt eine intensivere Durchmischung des in dem Mischbehälter angeordneten Futters.

Das Übersetzungsverhältnis ist dabei das Verhältnis der Drehzahl am Eingang des Getriebes zu der Drehzahl am Ausgang des Getriebes. Der Eingang des Getriebes ist dabei mit dem Motor verbunden und der Ausgang des Getriebes mit dem Mischwerkzeug. Bezogen auf die Drehmomente beschreibt es das Verhältnis des Drehmoments am Ausgang des Getriebes zum Drehmoment am Eingang des Getriebes.

Auch während eines Beladens des Mischbehälters mit Futterbestandteilen, die von dem Mischwerkzeug miteinander vermischt werden sollen, steigt das für das Drehen des Mischwerkzeugs notwendige Drehmoment. Wenn das für das Drehen des Mischwerkzeugs mit der aktuellen Drehzahl benötigte Drehmoment das von dem Motor bereitstellbare Drehmoment überschreitet, wird das Getriebe in eine Übersetzungsstufe mit einer höheren Übersetzung geschaltet. Hierdurch kann am Mischwerkzeug ein höheres Drehmoment bereitgestellt werden, so dass eine fortgesetzte Durchmischung des Futters im Mischbehälter erfolgen kann.

Bei einer drehmomentsensorlos ausgebildeten Antriebseinrichtung erfasst der Drehzahlsensor Änderungen in der Drehzahl eines Elements der Antriebseinrichtung. Wenn das Mischwerkzeug ein Drehmoment benötigt, das größer ist als das Drehmoment, das der Motor zum Antrieb der Antriebseinrichtung unter Beibehaltung der Übersetzungsstufe des Getriebes bereitstellen kann, kommt es zu einem Abfall der Drehzahl in der Antriebseinrichtung. Die Steuereinrichtung ist dann ausgebildet, das Getriebe wenn möglich in eine Übersetzungsstufe zu schalten, die ein höheres Übersetzungsverhältnis aufweist, wenn ein solcher Abfall der Drehzahl für einen vorbestimmten Zeitraum einen vorbestimmten Betrag überschreitet.

Umgekehrt kann die Drehzahl ansteigen, wenn sich das zum Drehen des Mischelements benötigte Drehmoment verringert. Dies kann der Fall sein, wenn eine zunächst stark verdichtete Futterkomponente im Mischbehälter durch das Mischwerkzeug aufgelockert wurde oder der Mischbehälter zumindest teilweise entleert wurde. Der Drehmomentsensor registriert dann eine steigende Drehzahl, woraufhin die Steuereinrichtung das Getriebe wenn möglich in eine Übersetzungsstufe mit einer niedrigeren Übersetzung schaltet.

Voraussetzung ist dabei jeweils, das ausgehend von der aktuellen Übersetzungsstufe im Getriebe jeweils eine Übersetzungsstufe mit einer höheren bzw. einer niedrigeren Übersetzung zur Verfügung steht.

Auf diese Weise kann ein Futtermischer unter Verzicht auf einen Drehmomentsensor und somit besonders einfach und kostengünstig erhalten werden.

Vorzugsweise umfasst das Getriebe eine dritte Übersetzungsstufe. Die erste, zweite und dritte Übersetzungsstufe weisen dabei aufsteigende bzw. absteigende Übersetzungsverhältnisse auf. In diesem Fall kann der Futtermischer beim Befüllen des Mischbehälters mit den einzelnen Komponenten des zu mischenden Futters zunächst mit dem Getriebe in der zweiten, mittleren Übersetzungsstufe betrieben werden. Ausgehend von dieser Übersetzungsstufe kann die Steuereinrichtung dann das Getriebe in Abhängigkeit der vom Drehzahlsensor aufgenommenen Drehzahl falls notwendig in die erste oder die dritte Übersetzungsstufe mit einem entsprechend höheren oder entsprechend niedrigeren Übersetzungsverhältnis schalten.

Bevorzugt ist die Steuereinrichtung zudem eingerichtet, das Getriebe zeitabhängig in die andere Übersetzungsstufe bzw. in eine der anderen Übersetzungsstufen zu schalten. So kann ein Mischprogramm geplant werden, bei dem das Mischwerkzeug zunächst mit dem Getriebe in der ersten Übersetzungsstufe betrieben wird. Nach Ablauf einer gewissen, vorgewählten oder vorgegebenen Zeit wird das Getriebe in die zweite Übersetzungsstufe geschaltet. Nach Ablauf eines zweiten, vorgewählten oder vorgegebenen Zeitraums wird das Getriebe in die dritte Übersetzungsstufe geschaltet. Sofern innerhalb dieser Zeiträume kein Abfall oder Anstieg der Drehzahl registriert wird, die die Steuereinrichtung zu einem drehzahlgesteuerten Schalten des Getriebes veranlassen würde, erfolgt das Mischen des Futters entsprechend der zeitlichen Vorgaben.

Über ein solches, zeitgesteuertes Programm kann insbesondere eine Durchmischung des Futters bei bereits teilweise oder vollständig gefülltem Mischbehälter erfolgen. Zunächst wird das Mischwerkzeug mit dem Getriebe in der ersten Übersetzungsstufe mit hohem Übersetzungsverhältnis mit niedriger Geschwindigkeit aber hohem Drehmoment in Bewegung versetzt. Das Futter beginnt sich aufzulockern, wodurch das zum Drehen des Mischwerkzeugs benötigte Drehmoment sinkt. Das Getriebe kann anschließend in die zweite und dann die dritte Übersetzungsstufe geschaltet werden, wobei das Mischwerkzeug nach jedem Schaltvorgang schneller dreht und eine intensivere Durchmischung des im Mischbehälter angeordneten Futters bewirkt.

Alternativ oder zusätzlich kann ein anderes, zeitgesteuertes Programm für das Beladen des Futtermischers mit Futter vorgesehen sein. Hierbei wird das Mischwerkzeug zunächst mit dem Getriebe in der dritten Übersetzungsstufe mit niedrigem Übersetzungsverhältnis mit hoher Geschwindigkeit aber niedrigem Drehmoment betrieben, solange der Mischbehälter nur mit wenig Futter gefüllt ist. Wenn der Mischbehälter während des Beladevorgangs mit weiteren Futterkomponenten befüllt wird, steigt das zum Drehen des Mischwerkzeugs benötigte Drehmoment. Das Getriebe kann anschließend in die zweite und dann die erste Übersetzungsstufe geschaltet werden, wobei das Mischwerkzeug nach jedem Schaltvorgang langsamer dreht und ein höheres Drehmoment zum Durchmischen der nun größeren Futtermenge im Mischbehälter aufbringt.

Vorzugsweise ist das Getriebe als ein Stirnradgetriebe mit hydraulisch schaltbaren Lamellenkupplungen ausgebildet. Durch Druckbeaufschlagung der einzelnen Lamellenkupplungen wird das Getriebe zwischen den unterschiedlichen Übersetzungsstufen umgeschaltet. Wenn die Lamellenkupplungen nicht mit Druck beaufschlagt sind, befindet sich das Getriebe in einer Neutralstellung, dem Neutralgang.

Ein solches hydraulisch bzw. elektrohydraulisch geschaltetes Getriebe kann mit weiteren Sensoren versehen sein, die insbesondere den Druck und/oder die Temperatur einer hydraulischen Flüssigkeit, mit der die Lamellenkupplungen mit Druck beaufschlagt werden, überwachen. Diese Sensoren sind vorzugsweise ebenfalls mit der Steuereinrichtung verbunden. Wenn der Druck unter ein definiertes Niveau abfällt
oder über ein definiertes Niveau steigt, ist die Steuereinrichtung eingerichtet, ein Umschalten in eine andere Übersetzungsstufe zu verhindern. Die Steuereinrichtung schaltet das Getriebe stattdessen in den Neutralgang. Durch eine solche Überwachung wird die Betriebssicherheit des Futtermischers erhöht und sonst mögliche Beschädigungen werden vermieden.

Die Temperatur der Hydraulikflüssigkeit hat einen Einfluss auf die Viskosität der Hydraulikflüssigkeit, die wiederum die Schaltzeiten der Lamellenkupplungen beeinflusst. Die Steuereinrichtung kann in Abhängigkeit der gemessenen Temperatur der Hydraulikflüssigkeit und der zu dieser Temperatur korrespondierenden Viskosität die Schaltzeiten innerhalb vorgegebener Parameter anpassen.

Wenn die Temperatur einen vorgegebenen unteren Grenzwert unterschreitet oder einen vorgegebenen oberen Grenzwert überschreitet, schaltet die Steuereinrichtung das Getriebe in den Neutralgang. Durch eine solche Überwachung wird die Betriebssicherheit des Futtermischers erhöht und sonst mögliche Beschädigungen werden vermieden.

Weiterhin kann die Antriebseinrichtung mit zumindest zwei Drehzahlsensoren versehen sein, die so angeordnet sind, dass aus dem Vergleich der von den verschiedenen Drehzahlsensoren gemessenen Drehzahlen ein Schlupf in der Lamellenkupplung bestimmt werden kann. Der Vergleich kann durch Bildung der Verhältnisse der Drehzahlen oder durch Bildung einer Differenz der Drehzahlen erfolgen. Wenn dieser Schlupf einen bestimmen Grenzwert überschreitet, schaltet die Steuereinrichtung das Getriebe in den Neutralgang. Hierdurch werden ungewünschte Betriebszustände sowie etwaige Beschädigungen des Futtermischers vermieden. Der Futtermischer ist besonders langlebig.

Vorzugsweise umfasst der Futtermischer eine mit der Steuereinheit verbundene Bedieneinheit. Diese Bedieneinheit weist insbesondere Wahltaster für die verschiedenen Übersetzungsstufen des Getriebes und/oder für die Eingabe bestimmter Zeiten auf. Ein Bediener des Futtermischers kann über diese Bedieneinheit eine bestimmte Übersetzungsstufe anfordern und/oder der Steuereinheit mitteilen, wie lange das Getriebe in der bestimmten Übersetzungsstufe verbleiben soll, bis das Getriebe in eine andere Übersetzungsstufe geschaltet werden soll. Über eine solche Bedieneinheit kann ein Bediener des Futtermischers der Steuereinheit ein bestimmtes Mischprogramm vorgeben, also festlegen, wie lange das Mischwerkzeug von dem Getriebe mit einer bestimmten Übersetzungsstufe angetrieben werden soll. Dies gilt, solange keine unterwarteten Ereignisse wie ein Abfall der Drehzahl auftreten, die die Steuereinheit veranlassen, das Getriebe von dem Programm abweichend in einen anderen Zustand zu versetzen.

Weiterhin ist ein Verfahren zum Mischen von Futter mit einem vorbeschriebenen Futtermischer Gegenstand der Erfindung. Hierbei wird das Mischwerkzeug über die Antriebseinrichtung in Drehung versetzt. Die Steuereinrichtung schaltet das Getriebe nach Ablauf einer vorbestimmten Zeitspanne, der maximalen Mischzeit, in den Neutralgang. Durch das Schalten in den Neutralgang wird das Mischwerkzeug nicht länger angetrieben. Das Futter wird geschont und ein unnötiger Energieverbrauch für ein unnötiges Mischen wird vermieden.

Vorzugsweise ist der Futtermischer mit einer einen Drehzahlsensor aufweisenden Antriebseinrichtung versehen. Über diesen Drehzahlsensor wird eine Anfangsdrehzahl aufgenommen, die als Arbeitsdrehzahl gespeichert wird. Anschließend wird der Mischbehälter des Futtermischers mit Futter beladen, wobei der Drehzahlsensor während der Beladung jeweils Ist-Drehzahlen aufnimmt. Die Ist-Drehzahlen werden jeweils mit der Anfangsdrehzahl verglichen. Die Steuereinrichtung schaltet das Getriebe automatisch in eine andere Übersetzungsstufe, wenn die Ist-Drehzahlen innerhalb einer vorbestimmten und/oder vorgebbaren Zeitspanne um einen vorbestimmten Prozentsatz von der anfangs gespeicherten Arbeitsdrehzahl abweichen.

Weiter besonders vorzugsweise schaltet die Steuereinrichtung das Getriebe nach Ablauf eines vorbestimmten Zeitraums, der Schaltzeit, in eine andere Übersetzungsstufe. Dies ist insbesondere dann der Fall, wenn während dieses vorbestimmten Zeitraums die vom Drehzahlsensor erfassten Ist-Drehzahlen nicht um einen vorbestimmten Prozentsatz von der Arbeitsdrehzahl abweichen.

Bevorzugt umfasst der Futtermischer zumindest einen weiteren, an der Antriebseinrichtung angeordneten Drehzahlsensor, der angeordnet ist, einen Schlupf einer Lamellenkupplung zu erkennen, und/oder einen Drucksensor und/oder einen Temperatursensor, wobei der Drucksensor ausgebildet ist, einen Druck einer Hydraulikflüssigkeit aufzunehmen, und der Temperatursensor ausgebildet ist, eine Temperatur einer Hydraulikflüssigkeit aufzunehmen. Die Steuereinrichtung schaltet das Getriebe in den Neutralgang, wenn das Verhältnis und/oder die Differenz der vom Drehzahlsensor aufgenommenen Drehzahl und der vom weiteren Drehzahlsensor aufgenommenen Drehzahl und/oder der vom Drucksensor aufgenommene Druck der Hydraulikflüssigkeit und/oder die vom Temperatursensor aufgenommene Temperatur der Hydraulikflüssigkeit einen vorgegebenen Maximalwert überschreitet und/oder einen vorgegebenen Minimalwert unterschreitet.

Dadurch, dass die Steuereinrichtung das Getriebe automatisch in den Neutralgang schaltet, wenn jeweils ein vorgegebener Maximalwert überschritten oder ein vorgegebener Minimalwert unterschritten wird, werden unerwünschte Betriebszustände des Futtermischers verhindert und die Lebensdauer des Futtermischers erhöht.

Weitere Vorteile und Einzelheiten sind der nachfolgenden Figurenbeschreibung zu entnehmen. Es zeigen auf schematische Weise:
Fig. 1 eine Abbildung eines erfindungsgemäßen Futtermischers;
Fig. 2 ein Ablaufdiagramm ausgehend von dem Getriebe im Neutralgang;
Fig. 3 ein Ablaufdiagramm ausgehend von dem Getriebe in der ersten Übersetzungsstufe;
Fig. 4 ein Ablaufdiagramm ausgehend von dem Getriebe in der zweiten Übersetzungsstufe;
Fig. 5 ein Ablaufdiagramm ausgehend von dem Getriebe in der dritten Übersetzungsstufe.

Gleich oder ähnlich wirkende Teile sind, sofern dienlich, mit identischen Bezugsziffern versehen. Einzelne technische Merkmale der nachfolgend beschriebenen Ausführungsbeispiele können mit den Merkmalen der unabhängigen Ansprüche sowie mit den Merkmalen einzelner vorbeschriebener Ausführungsbeispiele zu erfindungsgemäßen Gegenständen kombiniert werden.

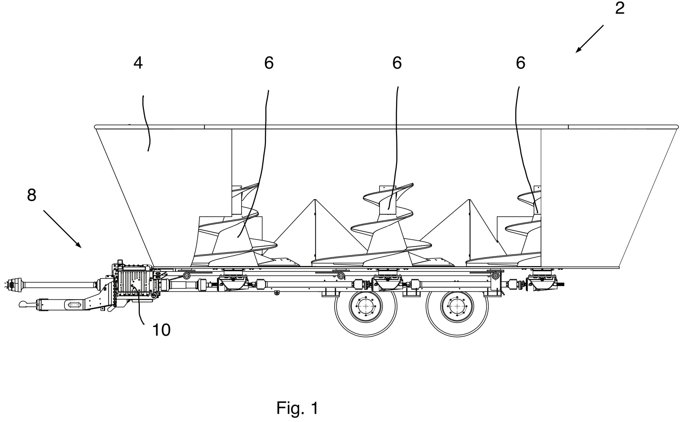

Fig. 1 zeigt einen Futtermischer 2 mit einem Mischbehälter 4. In dem Mischbehälter 4 sind im dargestellten Ausführungsbeispiel drei Mischwerkzeuge 6 dargestellt. Die Mischwerkzeuge 6 sind als vertikal angeordnete Mischschnecken ausgebildet. Die Mischwerkzeuge 6 sind gemeinsam über eine Antriebseinrichtung 8 bewegbar. Die Antriebseinrichtung 8 ist unterhalb des Mischbehälter 4 angeordnet und umfasst ein Getriebe 10. Dieses Getriebe 10 ist vorliegend als Lastschaltgetriebe ausgebildet.

Im dargestellten Ausführungsbeispiel ist der Futtermischer 2 so ausgebildet, dass er an ein Zugfahrzeug, insbesondere einen landwirtschaftlichen Schlepper, angehängt werden kann. Hierfür weist der Futtermischer 2 auf der in Fig. 1 linken Seite eine Deichsel auf. Zudem ist in Fig. 1 eine Zapfwelle dargestellt, mit der der Futtermischer 2 mit einer Zapfstelle des landwirtschaftlichen Nutzfahrzeugs verbunden werden kann. Über diese Zapfstelle stellt das landwirtschaftliche Nutzfahrzeug die Energie zum Antreiben der Mischwerkzeuge 6 bereit.

Der Futtermischer 2 kann alternativ auch als Selbstfahrer ausgebildet sein, wobei der Futtermischer 2 dann auch einen Fahrantrieb zur Fortbewegung des Futtermischers 2 aufweist. Zudem weist der Futtermischer 2 einen Motor zum Antreiben der Antriebseinrichtung 8 auf. Hierbei kann es sich um den Motor des Fahrantriebs des Futtermischers 2 handeln. Alternativ kann es sich um einen hiervon separaten Motor handeln, der bspw. als Hydraulikmotor ausgebildet sein kann.

Wenn das Drehmoment zum Drehen der Mischwerkzeuge 6 das Drehmoment übersteigt, dass das landwirtschaftliche Nutzfahrzeug über die Zapfstelle bereitstellen kann, sinkt die Drehzahl in der Antriebseinrichtung 8. Die Antriebseinrichtung 8 ist mit zumindest einem Drehzahlsensor versehen, der in Fig. 1 nicht dargestellt ist. Über den Drehzahlsensor wird diese Verringerung der Drehzahl erfasst. Eine nicht dargestellte Steuereinrichtung des Futtermischers 2 schaltet dann das Getriebe 10 nach Möglichkeit so, dass es in eine Übersetzungsstufe geschaltet wird, die ein höheres Übersetzungsverhältnis aufweist. Hierdurch wird bei gleicher Drehzahl der Zapfstelle des landwirtschaftlichen Nutzfahrzeugs ein höheres Drehmoment für die Mischwerkzeuge 6 bereitgestellt. Die Mischwerkzeuge 6 drehen dabei langsamer.

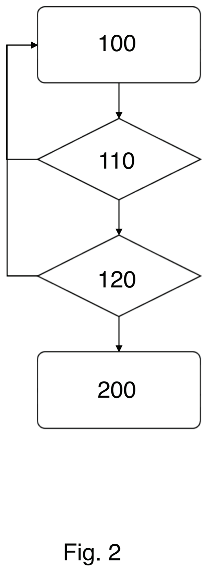

Die Figuren 2 bis 5 zeigen exemplarisch ein Ablaufdiagramm. Dieses Ablaufdiagramm zeigt, wie die Steuereinrichtung das Getriebe 10 schaltet, während der Mischbehälter 4 des Futtermischers 2 mit einzelnen Futterbestandteilen gefüllt und diese Futterbestandteile über die Mischwerkzeuge 6 vermischt werden. Zur besseren Übersichtlichkeit ist das Ablaufdiagramm in den Figuren 2 bis 5 in vier getrennten Abschnitten dargestellt. Jeder Abschnitt beginnt dabei mit dem Getriebe 10 in einem bestimmten Zustand. Die Teildiagramme gem. Fig. 2 bis Fig. 5 sind jedoch Bestandteil eines umfassenden großen Ablaufdiagramms und können zu einem solchen kombiniert werden.

Fig. 1 zeigt ein Ablaufdiagramm ausgehend von dem Getriebe 10 in dem Neutralgang 100. In dem Neutralgang 100 wird kein Drehmoment auf die Mischwerkzeuge 6 übertragen. Ein Motor zum Antreiben des Antriebseinrichtung 8, vorliegend die Zapfstelle des nicht dargestellten landwirtschaftlichen Nutzfahrzeuges, ist von den Mischwerkzeugen 6 entkoppelt.

Ausgehend von dem Getriebe 10 im Neutralgang wie in Punkt 100 dargestellt wird in einem Schritt 110 überprüft, ob die von dem Drehzahlsensor erfasste Drehzahl in einem vorgegebenen Bereich liegt, insbesondere größer als eine vorgegebene Minimaldrehzahl ist. Die Drehzahl wird dabei in der Antriebseinrichtung 8 vor dem Getriebe 10 oder im Bereich des Eingangs in das Getriebe 10 erfasst.

Wenn das Getriebe 10 mit hydraulisch schaltbaren Lamellenkupplungen versehen ist, kann zudem der Druck und die Temperatur einer Hydraulikflüssigkeit zum Schalten der Lamellenkupplungen überprüft werden. Wenn der Druck und die Temperatur der Hydraulikflüssigkeit innerhalb vorgegebener Grenzwerte liegen, wird in Schritt 120 überprüft, ob das Getriebe 10 geschaltet werden soll. Eine solche Schalteingabe kann von einem Bediener des Futtermischers über eine Bedieneinheit erfolgen, die mit der Steuereinheit verbunden ist.

Wenn in Schritt 110 festgestellt wird, dass die Drehzahl, die Temperatur oder der Druck der Hydraulikflüssigkeit außerhalb der vorgegebenen Grenzwerte liegen, verbleibt das Getriebe 10 in dem Neutralgang 100. Ein Schalten des Getriebes 10 ist so lange verhindert, bis sich die im Schritt 110 überprüften Parameter innerhalb der vorgegeben bzw. vorgebbaren Grenzwerte befinden.

Wenn in Schritt 120 festgestellt wird, dass kein Gangwechsel angefordert ist, verbleibt das Getriebe 10 im Neutralgang 100. Anderenfalls schaltet die Steuereinrichtung das Getriebe 10 am Anschluss an den Schritt 110 in die erste Übersetzungsstufe 200.

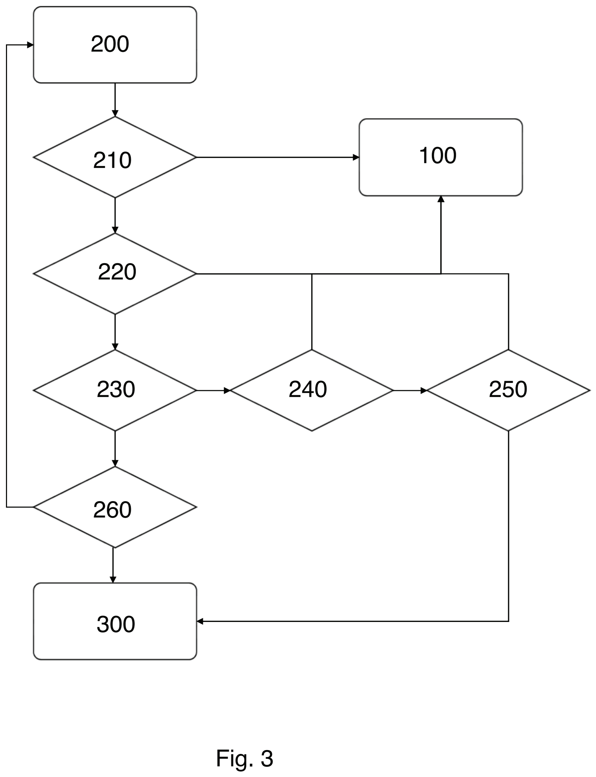

Das Flussdiagramm ausgehend von dem Getriebe 10 in der ersten Übersetzungsstufe 200 ist in Fig. 3 dargestellt. In Schritt 210 erfolgt zunächst wiederum eine Überprüfung, ob die Betriebsparameter wie die Drehzahl sowie die Temperatur und/oder der Druck einer Hydraulikflüssigkeit innerhalb vorgegebener Parameter liegen. In Schritt 210 kann nun zudem ein Schlupf der Lamellenkupplung im Getriebe 10 überprüft werden. Hierzu werden die Drehzahlen auf beiden Seiten der Kupplung erfasst. Wenn sich das Verhältnis der Drehzahlen innerhalb vorgegebener Toleranzen befindet bzw. die Differenz der Drehzahlen kleiner als ein vorgegebener Grenzwert ist, erfolgt in Schritt 220 eine Abfrage, ob ein Schalten des Getriebes 10 in den Neutralgang 100 gefordert ist. Wenn eine solche Schaltung im Schritt 220 angefordert ist, wird das Getriebe in den Neutralgang 100 geschaltet. Dasselbe erfolgt, wenn in Schritt 210 festgestellt wird, dass einer oder mehrere der überprüften Parameter außerhalb der vorgegebenen Grenzwerte liegen.

Wenn bei der Überprüfung in Schritt 220 keine Anforderung für einen Gangwechsel in den Neutralgang 100 festgestellt wird, wird in Schritt 230 überprüft, ob eine vorgegebene bzw. vorgebbare Zeitspanne abgelaufen ist. Diese Zeitspanne kann insbesondere von einem Bediener des Futtermischers 2 über die Bedieneinheit vorgegeben sowie ggf. auch angepasst werden. Wenn die vorgegebene Zeitspanne bereits abgelaufen ist, wird in Schritt 240 überprüft, ob das Getriebe 10 in den Neutralgang 100 geschaltet werden soll. Wenn dies der Fall ist, wird das Getriebe 10 in den Neutralgang 100 geschaltet. Anderenfalls erfolgt in Schritt 250 eine Überprüfung dahingehend, ob das Getriebe 10 in die zweite Übersetzungsstufe 300 geschaltet werden soll. Wenn dies der Fall ist, wird das Getriebe in die zweite Übersetzungsstufe 300 geschaltet. Anderenfalls wird das Getriebe in den Neutralgang 100 geschaltet.

Es kann somit vorgewählt werden, ob nach einer gewissen Zeit des Antriebs der Mischwerkzeuge 6 mit der ersten Übersetzungsstufe 200 der Mischvorgang beendet werden soll und das Getriebe in den Neutralgang 100 geschaltet werden soll oder nach Ablauf dieser Zeit in die zweite Übersetzungsstufe 300 hochgeschaltet werden soll.

Wenn in Schritt 230 festgestellt wird, dass die vorgegebene Zeitspanne noch nicht abgelaufen ist, wird in Schritt 260 überprüft, ob eine Anforderung zum Schalten des Getriebes 10 in die zweite Übersetzungsstufe 300 vorliegt. Ist dies nicht der Fall, bleibt das Getriebe in der ersten Übersetzungsstufe 200 und das Ablaufdiagramm der Figur 3 wird ausgehend von der ersten Übersetzungsstufe 200 erneut durchlaufen. Wenn im Schritt 260 eine Anforderung für einen Gangwechseleine in die zweite Übersetzungsstufe 300 festgestellt wird, schaltet die Steuereinrichtung das Getriebe 10 in die zweite Übersetzungsstufe 300.

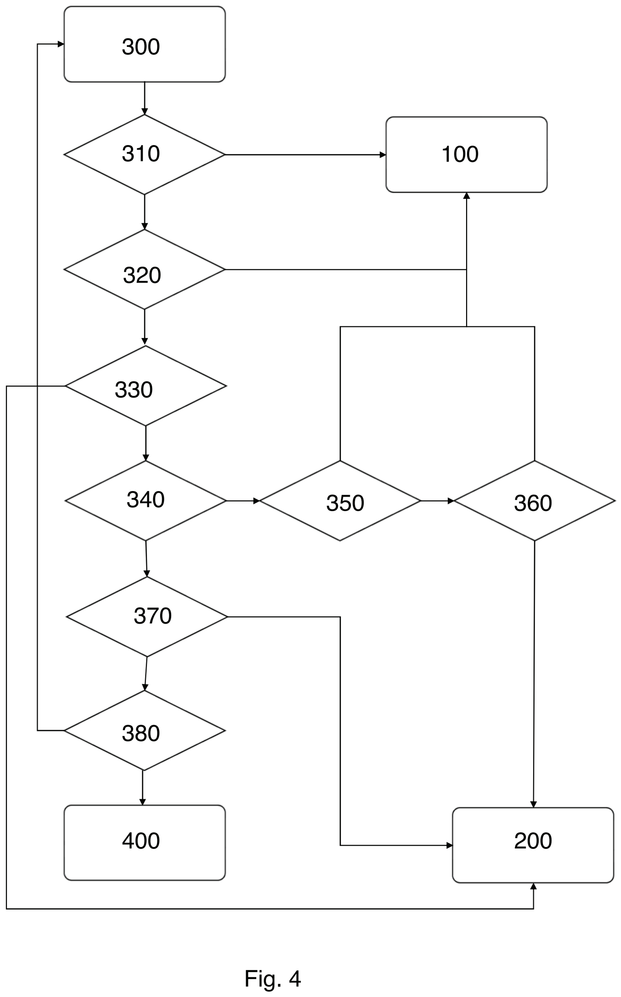

Fig. 4 zeigt das Ablaufdiagramm ausgehend von dem Getriebe 10 in der zweiten Übersetzungsstufe 300. Im Schritt 310 erfolgt erneut eine Überprüfung, ob sich die Betriebsparameter Schlupf, Drehzahlen, Temperatur und/oder Druck innerhalb vorgegebener bzw. vorgebbarer Parameter befinden. Ist dies nicht der Fall, wird das Getriebe 10 in den Neutralgang 100 versetzt. Im Schritt 320 wird geprüft, ob eine Schaltanforderung zum Schalten in den Neutralgang 100 vorliegt. Wenn dies der Fall ist, wird das Getriebe 10 in den Neutralgang 100 geschaltet. Anderenfalls wird in Schritt 330 geprüft, ob die Drehzahl während einer vorgegebenen Zeitspanne um einen vorgegebenen Prozentsatz von einer vorgegebenen Drehzahl bspw. einer Anfangsdrehzahl abweicht. Wenn ein Abfall der Drehzahl erfasst wird, schaltet die Steuereinrichtung das Getriebe 10 in die erste Übersetzungsstufe 200.

Andernfalls wird in Schritt 340 überprüft, ob eine vorgegebene bzw. vorgebbare Zeitspanne abgelaufen ist. Wenn dies der Fall ist, wird in Schritt 350 überprüft, ob da Getriebe 10 nach Ablauf der Zeitspanne in den Neutralgang 100 geschaltet werden soll. Ist dies der Fall, wird das Getriebe in den Neutralgang 100 versetzt. Anderenfalls wird in Schritt 360 geprüft, ob eine Anforderung zum Schalten des Getriebes in die erste Übersetzungsstufe 200 vorliegt. Wenn dies der Fall ist, wird das Getriebe 10 in die erste Übersetzungsstufe 200 geschaltet. Anderenfalls schaltet die Steuereinrichtung das Getriebe 10 in den Neutralgang 100.

Wenn in Schritt 340 festgestellt wird, dass die vorgegebene Zeitspanne noch nicht abgelaufen ist, wird in Schritt 370 überprüft, ob eine Anforderung zum Schalten des Getriebes 10 in die erste Übersetzungsstufe 100 vorliegt. Wenn dies der Fall ist, wird das Getriebe 10 in die erste Übersetzungsstufe 200 geschaltet. Ist dies nicht der Fall, erfolgt eine Überprüfung, ob eine Anforderung zum Schalten des Getriebes in die dritte Übersetzungsstufe 400 vorliegt. Wenn dies der Fall ist, schaltet die Steuereinrichtung das Getriebe 10 in die dritte Übersetzungsstufe 400. Anderenfalls verbleibt das Getriebe in der zweiten Übersetzungsstufe 300 und das Ablaufdiagramm gem. Fig. 4 wird erneut durchlaufen.

In Fig. 4 ist beschrieben, dass die Steuereinrichtung ausgehend von der zweiten Übersetzungsstufe 300 das Getriebe 10 automatisch in eine erste Übersetzungsstufe 200 schaltet, wobei die erste Übersetzungsstufe 200 ein höheres Übersetzungsverhältnis aufweist als die zweite Übersetzungsstufe 300. Dieser Schaltvorgang erfolgt basierend auf den Signalen eines Drehzahlsensors und nicht auf Basis eines Drehmomentsensors. Die Überprüfung in Schritt 330, ob die Drehzahl die in einer vorgegebenen Zeitspanne um einen vorgegebenen Prozentsatz von einer vorgegebenen Drehzahl abweicht, ist nur dann sinnvoll, wenn sich das Getriebe 10 in einer Übersetzungsstufe befindet, von der aus das Getriebe 10 in eine andere Übersetzungsstufe mit einem höheren Übersetzungsverhältnis geschaltet werden kann.

In Fig. 3 erfolgt in Schritt 210 ebenfalls eine Überprüfung der Drehzahl. Wenn dabei eine vorgegebene Minimaldrehzahl unterschritten wird, kann das Getriebe 10 nicht weiter in eine Übersetzungsstufe mit einem höheren Übersetzungsverhältnis geschaltet werden. Stattdessen wird das Getriebe 10 dann von der Steuereinrichtung in den Neutralgang 100 versetzt, in dem die Mischwerkzeuge 6 nicht länger angetrieben sind.

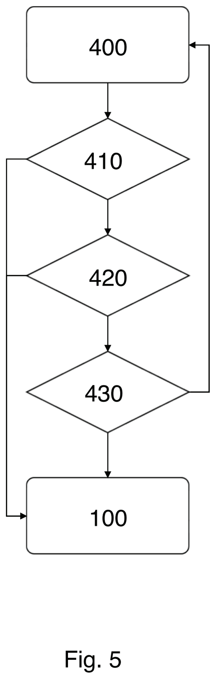

Fig. 5 zeigt ein Ablaufdiagramm ausgehend von dem Getriebe 10 in der dritten Übersetzungsstufe 400. Im Schritt 410 erfolgt wiederum eine Überprüfung der Parameter. Sollte einer oder mehr der Parameter außerhalb der vorgegeben Grenzwerte liegen, schaltet die Steuereinrichtung das Getriebe 10 in den Neutralgang 100. Anderenfalls wird in Schritt 420 überprüft, ob eine Anforderung zum Schalten des Getriebes 10 in den Neutralgang 100 vorliegt. Wenn dies der Fall ist, wird das Getriebe 10 in den Neutralgang 100 geschaltet. Anderenfalls erfolgt in Schritt 430 eine Prüfung dahin, ob eine vorgegebene Zeitspanne abgelaufen ist. Wenn dies der Fall ist, wird das Getriebe 10 ebenfalls von der Steuereinrichtung in den Neutralgang 100 geschaltet. Anderenfalls verbleibt das Getriebe 10 in der dritten Übersetzungsstufe 400 und das Ablaufdiagramm nach Fig. 5 wird erneut durchlaufen.

Der Mischvorgang wird spätestens dann endet, wenn das Getriebe 10 in die dritte Übersetzungsstufe 400 geschaltet wurde und dort für eine gewisse Zeit verblieben ist. Dann ist die vorgegebene maximale Mischzeit erreicht. Gangwechsel zurück in die zweite Übersetzungsstufe 300 oder erste Übersetzungsstufe 200 sind bei diesem Ablaufdiagramm nicht vorgesehen. Beim Abschluss des Mischvorgangs wird das Getriebe 10 stets in den Neutralgang 100 geschaltet.

Es sind jedoch auch andere Ablaufdiagramme denkbar, bei denen das Getriebe 10 beispielsweise zunächst in die zweite Übersetzungsstufe 300 geschaltet ist.

So ist auch ein Ablaufdiagramm denkbar, bei dem das Getriebe 10 ausgehend von dem Neutralgang 100 oder direkt in die dritte Übersetzungsstufe 400 mit niedrigem Übersetzungsverhältnis geschaltet wird. Die Mischwerkzeuge 6 drehen dann mit hoher Drehzahl und niedrigem Drehmoment. Anschließend sieht das Programm vor, das Getriebe 10 zeitabhängig zunächst in zweite Übersetzungsstufe 300 und anschließend in die erste Übersetzungsstufe 200 zu schalten, sofern nicht aufgrund eines Abfalls der Drehzahl oder eines Anstiegs des Drehmoments, einen Schaltanforderung oder einer der überwachten Parameter ein vorzeitiger und/oder abweichender Schaltvorgang ausgelöst wird. Ein solches Ablaufprogramm kann für einen Beladevorgang des Mischbehälters 4 verwendet werden, bei dem der Mischbehälter 4 zunächst leer oder nur gering gefüllt ist und über die Zeit durch Zugabe weitere Futterkomponenten weiter befüllt wird. Das zum Durchmischen der steigenden Futtermenge im Mischbehälter 4 benötigte Drehmoment steigt. Das Getriebe 10 wird in Übersetzungsstufen mit steigendem Übersetzungsverhältnis geschaltet, um weiterhin eine Durchmischung mit den Mischwerkzeugen 6 zu gewährleisten.

Nach Ablauf einer vorgegebenen oder vorgebbaren maximalen Mischzeit kann das Getriebe 10 in den Neutralgang 100 geschaltet werden.

Schaltanforderungen können in einem in der Steuereinrichtung ablaufenden Mischprogramm veränderlich oder unveränderlich vorgegeben sein oder durch einen Bediener erfolgen, insbesondere über eine Bedieneinheit des Futtermischers 2.

## Patentansprüche

1. Futtermischer (2) mit einem Mischbehälter (4) zur Aufnahme von Futter, wenigstens einem im Mischbehälter (4) drehend angeordneten Mischwerkzeug (6), einer Antriebseinrichtung (8) zum Antreiben des Mischwerkzeugs (6), die ein automatisch schaltbares Getriebe (10) mit einer ersten Übersetzungsstufe (200) und wenigstens einer zweiten Übersetzungsstufe (300) umfasst, wobei das Getriebe (10) als Lastschaltgetriebe ausgebildet ist, sowie mit einer Steuereinrichtung zum Schalten des Getriebes (10), **dadurch gekennzeichnet, dass** das Getriebe (10) zumindest einen Neutralgang (100) aufweist und die Steuereinrichtung ausgebildet ist, das Getriebe (10) nach Ablauf einer vorbestimmbaren Zeitspanne in den Neutralgang (100) zu schalten.

2. Futtermischer nach Anspruch 1, **dadurch gekennzeichnet, dass** die Antriebseinrichtung (8) einen Drehzahlsensor aufweist und drehmomentsensorlos ausgebildet ist, wobei die Steuereinrichtung ausgebildet ist, das Getriebe (10) in Abhängigkeit von der vom Drehzahlsensor erfassten Drehzahl zu schalten.

3. Futtermischer nach Anspruch 1 oder 2, **dadurch gekennzeichnet, dass** Getriebe eine dritte Übersetzungsstufe (400) aufweist.

4. Futtermischer nach einem der vorhergehenden Ansprüche, **dadurch gekennzeichnet, dass** das Getriebe (10) als Stirnradgetriebe mit hydraulisch schaltbaren Lamellenkupplungen ausgebildet ist.

5. Futtermischer nach einem der vorhergehenden Ansprüche, **dadurch gekennzeichnet, dass** der Futtermischer (2) eine mit der Steuereinheit verbundene Bedieneinheit aufweist.

6. Verfahren zum Mischen von Futter in einem Futtermischer (2) nach einem der Ansprüche 1 bis 5, **dadurch gekennzeichnet, dass** das Mischwerkzeug (6) über die Antriebseinrichtung (8) in Drehung versetzt wird und die Steuereinheit das Getriebe (10) nach Ablauf einer vorbestimmten Zeitspanne in den Neutralgang (100) schaltet.

7. Verfahren nach Anspruch 6 in einem Futtermischer (2) nach einem der Ansprüche 2 bis 5, **dadurch gekennzeichnet, dass** eine von dem Drehzahlsensor aufgenommene Anfangsdrehzahl als Arbeitsdrehzahl gespeichert wird, der Mischbehälter (4) mit Futter beladen wird, wobei der Drehzahlsensor während der Beladung jeweils Ist-Drehzahlen aufnimmt und ein Vergleich der jeweiligen Ist-Drehzahlen mit der Anfangsdrehzahl erfolgt, wobei die Steuereinrichtung das Getriebe (10) automatisch in eine andere Übersetzungsstufe schaltet, wenn die Ist-Drehzahlen innerhalb eines vorbestimmten Zeitraums um einen vorbestimmten Prozentsatz von der Arbeitsdrehzahl abweichen.

8. Verfahren nach Anspruch 6 oder 7, **dadurch gekennzeichnet, dass** die Steuereinrichtung das Getriebe (10) nach Ablauf einer vorbestimmten Schaltzeit in eine andere Übersetzungsstufe schaltet.

9. Verfahren nach einem der Ansprüche 6 bis 8, **dadurch gekennzeichnet, dass** der Futtermischer (2) zumindest einen weiteren, an der Antriebseinrichtung (8) angeordneten Drehzahlsensor und/oder einen Drucksensor und/oder einen Temperatursensor aufweist, wobei die Steuereinrichtung das Getriebe (10) in den Neutralgang (100) schaltet, wenn das Verhältnis der vom Drehzahlsensor aufgenommenen Drehzahl und der vom weiteren Drehzahlsensor aufgenommenen Drehzahl und/oder deren Differenz und/oder ein vom Drucksensor aufgenommener Druck und/oder eine von dem Temperatursensor aufgenommene Temperatur einen vorgegebenen Maximalwert überschreitet und/oder einen vorgegebenen Minimalwert unterschreitet.
